**Europäisches Patentamt**

**European Patent Office**

**Office européen des brevets**

(11) Publication number : **0 474 454 B1**

(12) **EUROPEAN PATENT SPECIFICATION**

(45) Date of publication of patent specification :
29.11.95 Bulletin 95/48

(51) Int. Cl.⁶ : **H04N 5/217**

(21) Application number : **91308041.2**

(22) Date of filing : **02.09.91**

(54) **Blemish compensators for charge coupled devices.**

(30) Priority : **06.09.90 JP 234595/90**

(43) Date of publication of application :
**11.03.92 Bulletin 92/11**

(45) Publication of the grant of the patent :
**29.11.95 Bulletin 95/48**

(84) Designated Contracting States :
**DE FR GB**

(56) References cited :
**EP-A- 0 140 266**
**EP-A- 0 313 278**
**GB-A- 2 181 020**
**US-A- 4 600 946**

(73) Proprietor : **SONY CORPORATION**
**7-35 Kitashinagawa 6-chome**
**Shinagawa-ku**
**Tokyo 141 (JP)**

(72) Inventor : **Kawabata, Akihiko, c/o Patents Division**
**Sony Corporation,**
**6-7-35 Kitashinagawa**
**Shinagawa-ku, Tokyo 141 (JP)**

(74) Representative : **Thomas, Christopher Hugo et al**
**D. Young & Co,**
**21 New Fetter Lane**
**London EC4A 1DA (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to blemish compensators for charge coupled devices.

With semiconductor image pick-up devices such as charge coupled devices (CCDs), defective pixels caused by local crystal defects produce an output signal of constant level in the absence of incident light, resulting in deterioration in the picture quality. There are known, for example, a black flaw defective pixel appearing as a black point, and a white flaw defective pixel appearing as a white point. Also, from the defective pixel, there may be supplied an output in which an offset voltage corresponding to a defective level is added to an image pick-up output corresponding to incident light.

Such blemishes are temperature dependent. A blemish compensator has been proposed to detect the temperature of a CCD and add a blemish compensation signal in which temperature compensation is implemented. (See UK Patent Application Publication No. GB-A-2 181 020, on which the pre-characterising part of claim 1 hereof is based.) However, since a blemish signal component of a CCD having temperature dependency has a relatively low signal level at an ordinary temperature, if the level adjustment of the blemish compensator is carried out at an ordinary temperature, the adjustment accuracy is poor. To carry out the level adjustment with a high accuracy, therefore, it has been proposed to place the CCD in a thermostatic chamber (see GB-A-2 181 020, cited above), but this is a complicated process, and also shortens the life of the CCD.

According to the present invention there is provided a blemish compensator for compensating blemished pixels of a charge coupled device by adjusting the level of a blemish compensation signal mixed with an output signal of said charge coupled device, the compensator comprising:

means for detecting the temperature of said charge coupled device;

means for generating said compensation signal, the level of which is changed in accordance with an output signal of said temperature detecting means; and

means for mixing said compensation signal with the output signal of said charge coupled device;

characterised by:

means for driving said charge coupled device, in an adjustment mode, with an accumulating period N times as long as a standard accumulating period employed in a normal operational mode; and

means for supplying an offset voltage to said temperature detecting means in said adjustment mode, said offset voltage corresponding to a temperature rise of said charge coupled device, determined by a temperature-level characteristic of said charge coupled device, which would result in the same increase in level of the output signal of the charge coupled device as does the N-fold increase in the accumulating period.

The invention will now be described by way of example with reference to the accompanying drawings, throughout which like parts are referred to by like references, and in which:

Figure 1 is a block diagram of an embodiment of blemish compensator according to the invention;

Figure 2 is a timing chart showing the operation;

Figure 3 is a characteristic diagram showing the temperature characteristic of a CCD.

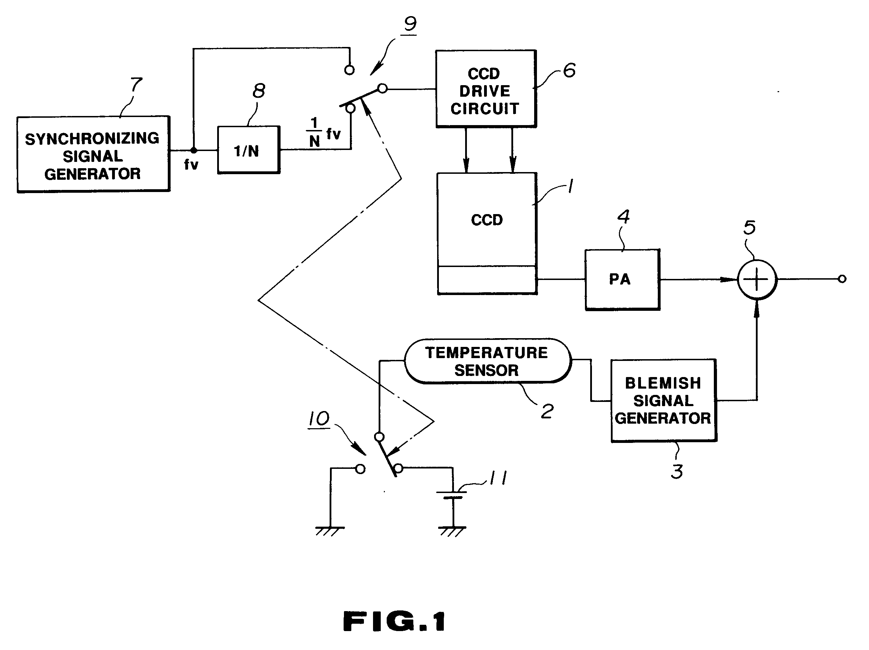

The blemish compensator shown in Figure 1 detects the temperature of a CCD image sensor 1 by using a temperature sensor 2 to generate, using a blemish compensation signal generator 3, a blemish compensation signal dependent on the temperature detected by the temperature sensor 2. An adder 5 adds the blemish compensation signal to an image pick-up output signal $CCD_{OUT}$ outputted through a process amplifier 4 from the image sensor, thereby to effect blemish compensation of the signal $CCD_{OUT}$.

A CCD drive circuit 6 for driving the image sensor 1 is selectively supplied through a changeover switch 9 with a vertical synchronizing signal fv generated by a synchronizing signal generator 7 and an 1/N frequency-divided vertical synchronizing signal fv/N obtained by frequency-dividing the vertical synchronizing signal fv in a frequency divider 8.

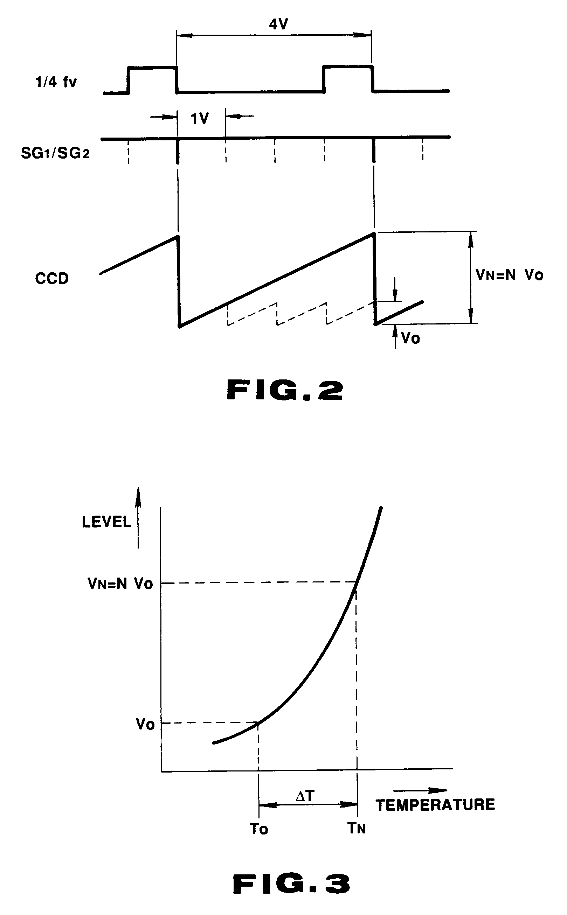

The vertical synchronizing signal fv is selected by the switch 9 in an ordinary operational mode. In this ordinary mode, as indicated by broken lines in Figure 2, the drive circuit 6 drives the image sensor with an ordinary charge storage time corresponding to one vertical interval 1V by a sensor gate pulse $SG_1$, for reading out charge stored in the image sensor 1 every one vertical interval 1V in synchronism with the vertical synchronizing signal fv.

On the other hand, the frequency-divided vertical synchronizing signal fv/N is selected by the switch 9 in an adjustment operational mode. In this adjustment mode, as indicated by the solid line in Figure 2, the drive circuit 6 drives the image sensor 1 with a charge storage time NV, N times longer than the ordinary charge storage time 1V by a sensor gate pulse $SG_2$, for reading out charge stored in the image sensor 1 every N vertical intervals NV, in synchronism with the frequency-divided vertical synchronizing signal fv/N. In this adjustment mode a quantity of charge N times larger than that in the ordinary operational mode is stored.

One end of the temperature sensor 2 is selectively connectable to earth or to an offset power supply 11 through a changeover switch 10 ganged with the switch 9.

In the ordinary mode where the switch 9 selects the vertical synchronizing signal fv, one end of the temperature sensor 2 is earthed through the switch 10. On the other hand, in the adjustment mode where the switch 6 selects the frequency-divided vertical synchronizing signal fv/N, one end of the temperature sensor 2 is connected to the offset power supply 11 through the switch 10.

When the image sensor 1 is driven with a charge storage time N times longer than the ordinary charge storage time, a quantity of charge N times larger than that in the ordinary operational mode is stored. As a result, the output level of the image sensor 1 is elevated to a level N times larger than that in the ordinary mode. The offset power supply 11 supplies, dependent on the temperature detected output by the temperature sensor 2, an offset voltage corresponding to a temperature elevation $\Delta T$ in which an elevation N of the output level corresponds to an elevation of the output level due to the temperature characteristic of the image sensor 1.

Assuming now that the general expression of the temperature characteristic of the image sensor 1 is $K^{\Delta T}$, the following relationship holds:

$$N = K^{\Delta T}$$

The above relationship is rewritten as follows:

$$\Delta T = \frac{\log N}{\log K}$$

When it is assumed that the temperature characteristic of, for example, a white flaw defect is 1.8 times $\Delta T/10$, $V_N$ is a white flaw defect level at a temperature $T_N$, and $V_0$ is a white flaw defect level at a temperature $T_0$, the following relationship holds:

$$\frac{V_N}{V_0} = 1.8^{\Delta T/10}$$

Thus, the temperature difference $\triangle T = T_N - T_0$ (see Figure 3) is expressed as follows:

$$\triangle T = \frac{10 \log V_0/V_N}{\log 1.8}$$

When N in the adjustment mode is assumed to be, for example, four, $\triangle T$ is expressed as follows:

$$\triangle T = \frac{10 \log 4}{\log 1.8}$$

Namely, this temperature difference corresponds to a temperature elevation of about 23.6°C.

In view of this, when the temperature characteristic of the temperature sensor 2 is assumed to be 10mV/°C, the offset power supply 11 supplies, in the adjustment mode, an offset voltage of 0.236 V corresponding to the temperature elevation of 23.6°C to the temperature sensor 2.

In the adjustment mode, an offset voltage of 0.236 V is supplied to the temperature sensor 2, and in the state where N is assumed to be four, drives the image sensor 1 with a charge storage time four times longer than an ordinary charge storage time. The signal level of a blemish compensation signal that the blemish compensation signal generator 3 generates is then adjusted to a reasonable level. This makes it possible to carry out the level adjustment of the blemish compensation signal generator 3 with a high accuracy, in a state equivalent to the state where the temperature of the image sensor 1 is elevated by 23.6°C.

In the ordinary mode, the blemish compensation signal from the blemish compensation signal generator 3 which has been level-adjusted with a high accuracy in the adjustment mode in the manner described above is added to and synthesized with the output signal $CCD_{OUT}$ of the image sensor 1, thereby making it possible to effect good blemish compensation with less compensation error.

Thus, it is possible to adjust the signal level of the blemish compensation signal with a high accuracy at an ordinary temperature without the need for large equipment such as a thermostatic chamber, and it is possible to provide a blemish compensator capable of reasonable blemish compensation with less deterioration in the picture quality due to compensation error.

## Claims

1. A blemish compensator for compensating blemished pixels of a charge coupled device (1) by adjusting the level of a blemish compensation signal mixed with an output signal of said charge coupled device (1), the compensator comprising:

   means (2) for detecting the temperature of said charge coupled device (1);

   means (3) for generating said compensation signal, the level of which is changed in accordance with an output signal of said temperature detecting means (2); and

   means (5) for mixing said compensation signal with the output signal of said charge coupled device (1);

   characterised by:

   means (6) for driving said charge coupled device (1), in an adjustment mode, with an accumulating period N times as long as a standard accumulating period employed in a normal operational mode; and

   means (11) for supplying an offset voltage to said temperature detecting means (2) in said adjustment mode, said offset voltage corresponding to a temperature rise of said charge coupled device (1), determined by a temperature-level characteristic of said charge coupled device (1), which would result in the same increase in level of the output signal of the charge coupled device (1) as does the N-fold increase in the accumulating period.

2. A compensator according to claim 1 wherein said drive means (6) includes a clock pulse generator (7) for generating a clock pulse for driving said charge coupled device (1) in said standard condition, and a frequency divider (8) connected to said clock pulse generator (7) for dividing the frequency of said clock pulse by N.

**Patentansprüche**

1. Fehlstellenkompensator zur Kompensation von Fehlstellenpixeln einer ladungsgekoppelten Einrichtung (1) durch Einstellen des Pegels eines Fehlstellenkompensationssignals, das mit einem Ausgangssignal einer ladungsgekoppelten Einrichtung (1) gemischt wird, wobei der Kompensator aufweist:

eine Einrichtung (2) zur Ermittlung der Temperatur der ladungsgekoppelten Einrichtung (1);

eine Einrichtung (3) zur Erzeugung des Kompensationssignals, dessen Pegel in Abhängigkeit von einem Ausgangssignal der Temperaturermittlungseinrichtung (2) geändert wird; und

eine Einrichtung (5) zum Mischen des Kompensationssignals mit dem Ausgangssignal der ladungsgekoppelten Einrichtung (1);

**gekennzeichnet durch:**

eine Einrichtung (6) zum Ansteuern der ladungsgekoppelten Einrichtung (1) in einem Einstellungsmodus mit einer Ansammlungsperiode, die N-mal so lang ist wie eine Standard-Ansammlungsperiode, die bei einem normalen Betriebsmodus verwendet wird; und

eine Einrichtung (11) zum Liefern einer Offset-Spannung zur Temperaturermittlungseinrichtung (2) im Einstellungsmodus, wobei die Offset-Spannung einem Temperaturanstieg der ladungsgekoppelten Einrichtung (1) entspricht, der durch Temperatur-Pegel-Kennlinie der ladungsgekoppelten Einrichtung (1) bestimmt wird, welcher den gleichen Pegelanstieg des Ausgangssignals der ladungsgekoppelten Einrichtung (1) zur Folge haben würde wie dies die N-fache Erhöhung in der Ansammlungsperiode tut.

2. Kompensator nach Anspruch 1, wobei die Ansteuereinrichtung (6) einen Taktimpulsgenerator (7) aufweist, um einen Taktimpuls zu erzeugen, um die ladungsgekoppelte Einrichtung (1) in der Standardbedingung anzusteuern, und einen Frequenzteiler (8), der mit dem Taktimpulsgenerator (7) verbunden ist, um die Frequenz des Taktimpulses durch N zu teilen.

**Revendications**

1. Compensateur de taches pour compenser les éléments d'image à tache d'un dispositif à couplage de charges (1) en réglant le niveau d'un signal de compensation de tache mélangé à un signal de sortie dudit dispositif à couplage de charges (1), le compensateur comprenent:

- des moyens (2) pour détecter la température dudit dispositif à couplage de charges (1);
- des moyens (3) pour produire ledit signal de compensation dont le niveau est changé selon un signal de sortie desdits moyens détecteurs de température (2); et
- des moyens (5) pour mélanger ledit signal de compensation au signal de sortie dudit dispositif à couplage de charges (1),

caractérisé par:

- des moyens (6) pour attaquer ledit dispositif à couplage de charges (1) dans un mode de réglage avec une période d'accumulation N fois plus longue que qu'une période d'accumulation normale employée dans le mode de fonctionnement normal; et
- des moyens (11) pour fournir une tension de décalage auxdits moyens détecteurs de température (2) dans ledit mode de réglage, ladite tension de décalage correspondant à une augmentation de température dudit dispositif à couplage de charges (1) déterminée par une caractéristique température-niveau dudit dispositif à couplage de charges (1) qui donne la même augmentation de niveau du signal de sortie du dispositif à couplage de charges (1) que l'augmentation de N fois de la période d'accumulation.

2. Compensateur de taches selon la revendication 1, dans lequel lesdits moyens d'attaque (6) comprennent un générateur d'impulsions d'horloge (7) pour produire des impulsions d'horloge pour attaquer ledit dispositif à couplage de charge (1) dans ledit état normal, et un diviseur de fréquence (8) connecté audit générateur d'impulsions d'horloge pour diviser la fréquence desdites impulsions d'horloge par N.

**FIG.1**

EP 0 474 454 B1

EP 0 474 454 B1

**FIG.2**

**FIG.3**

6